# EUROPEAN PATENT SPECIFICATION

(11) **EP 4 721 569 B1**
(45) Date of publication and mention of the grant of the patent: **08.07.2026**
(21) Application number: 24204811.4
(22) Date of filing: 04.10.2024
(51) Int. Cl.: A21C 9/02, F26B 21/00, F26B 23/00

(54) **DRYING UNIT AND DRYING PROCESS FOR DRYING PASTA OR SNACK PRODUCTS**
TROCKNUNGSEINHEIT UND TROCKNUNGSVERFAHREN ZUM TROCKNEN VON TEIGWAREN ODER SNACKPRODUKTEN
UNITÉ DE SÉCHAGE ET PROCÉDÉ DE SÉCHAGE POUR SÉCHER DES PÂTES OU DES SNACKS

(43) Date of publication of application: 08.04.2026
(73) Proprietor: Pavan S.p.A., 35015 Galliera Veneta (PD) (IT)
(72) Inventor: SPATZ, Juergen, 31050 PONZANO VENETO (TREVISO) (IT); FERRONATO, Marco, 36022 CASSOLA (VICENZA) (IT)
(74) Representative: Dondi, Silvia

(56) References cited:
- CN-A- 108 759 170
- CN-U- 203 446 416
- CN-U- 208 720 760
- CN-U- 209 214 303
- JP-B2- 5 304 190

## Description

The present invention relates to a drying unit and a drying process for drying pasta or snack products.

The invention finds application in the field of manufacturing pasta or snack products, in particular to the drying stage. In pasta- or snack-making process, drying involves a step of contacting the products with a stream of hot air.

In other sectors such as tobacco, fruit, and wood, dryer solutions containing energy recovery systems are already known on the market. They typically are static dryers with only one climatic zone associated with air heated directly from a heat pump.

Document CN208720760U and document CN203446416U disclose solutions according to the preamble of claim 1.

The main drawback of these solutions is that they are realized to manage heat recovery from one single climatic zone and therefore fail when multiple thermal sources are available. In particular, dryers for pasta or snack products typically works with multiple climatic zones. Each climatic zone has its own temperature and humidity setpoints. The above-mentioned solutions cannot be used in such a context.

There is the need to obtain a dryer with heat recovery systems capable of managing different thermal sources, in particular different climatic zones of the dryer.

In this context, the technical task at the basis of the present invention is to propose a drying unit and a drying process for drying pasta or snack products, which overcome the above-mentioned drawbacks of the prior art.

In particular, the object of the present invention is to propose a drying unit and a drying process for drying pasta or snack products capable of managing heat recovery from different thermal sources at different levels of temperatures while maximizing COP.

Another object of the present invention is to propose a drying unit and a drying process for drying pasta or snack products capable of managing heat recovery with high flexibility to independently manage heat recovery from different climatic zones (with different values of working parameters such as temperature, humidity, ...).

The stated technical task and specified objects are substantially achieved by a drying unit for drying pasta or snack products, comprising:
a dryer of the type having a circulating airflow;
a heat exchanger associated with the dryer so that the airflow is heated before drying the products;
a heat pump;
a first circuit of a first heat transfer medium, said first circuit developing between the heat pump and the heat exchanger so that the first heat transfer medium receives heat from the heat pump and transfers it to the airflow in the heat exchanger;
a heat recovery system comprising:
   - a second circuit of a second heat transfer medium, said second circuit being associated with the heat pump so that the second heat transfer medium transfers heat to it;
   - a first and a second heat recovery unit arranged on the second circuit to heat the second heat transfer medium and upstream of the heat pump;
   - a first and a second heat source line, each heat source line being configured to convey an exhaust fluid used in processes internal to the drying unit to one of the heat recovery units for heating the second heat transfer medium,
at least one of the first and second heat source lines being an extraction line of exhaust air from the dryer.

Preferably, the dryer comprises at least a first and a second climatic zone configured to perform a drying treatment of the products with different parameters.

According to a first embodiment, the first and second heat source lines are extraction lines of exhaust air from the first and second climatic zones.

According to a first embodiment of the heat recovery units, the first heat source line is configured to carry exhaust air having lower dew point with respect to exhaust air carried on the second heat source line, the first heat recovery unit being arranged in series and upstream of the second heat recovery unit, the first heat recovery unit being associated with the first heat source line so that heat recovery is performed in ascending order of dew point of the exhaust air.

According to a second embodiment of the heat recovery units, the second circuit comprises a bifurcation thus defining at least a first branch and a second branch in parallel, the first heat recovery unit being arranged on the first branch and the second heat recovery unit being arranged on the second branch, the first branch being shaped so as to flow back into the second branch downstream the second heat recovery unit and upstream of the heat pump.

Preferably, the first heat recovery unit comprises:
- an additional heat pump associated with the first branch to transfer heat to the second heat transfer medium;
- a third circuit of a third heat transfer medium associated to the heat pump as heat source;
- a heat exchanger arranged on the third circuit upstream of the heat pump, the heat exchanger being associated with one of the heat source lines so as to transfer heat to the third heat transfer medium.

According to a second embodiment, the first heat source line is an extraction line of exhaust water from a cooling line of utilities of the drying unit while the second heat source line is an extraction line of exhaust air from the dryer.

According to one embodiment, the heat source line in the form of an extraction line of exhaust air comprises a vent route for venting exhaust air in the environment.

According to one embodiment, the dryer comprises at least one climatic zone where the products are dried and a system for adjusting a relative humidity value in said at least climatic zone, the system comprising at least one relative humidity sensor for monitoring the relative humidity of air in the climatic zone and a control unit configured at least to:
- receive the relative humidity data from the relative humidity sensor;
- compare those data with a predefined range;
- adjust the air flow rate towards the heat recovery unit and the air flow rate vented in the environment to keep the level of relative humidity inside the climatic zone within the predefined range.

The stated technical task and specified objects are substantially achieved by a drying process for drying pasta or snack products, comprising the steps of:
drying the products by means of a circulating airflow, the step of drying causing the generation of exhaust air after moisture absorption from the products;
heating the circulating airflow in a heat exchanger, the step of heating taking place before the step of drying the products;
circulating a first heat transfer medium in a first circuit, the step of heating the circulating airflow occurs by heat transfer from the first heat transfer medium to the circulating airflow. The first circuit develops between a heat pump and the heat exchanger so that the first heat transfer medium receives heat from the heat pump and transfers it to the airflow in the heat exchanger;
circulating a second heat transfer medium in a second circuit, said second circuit being associated with the heat pump so that the second heat transfer medium transfers heat to the first heat transfer medium via the heat pump;
heating the second heat transfer medium circulating in the second circuit, the step of heating the second heat transfer medium taking place before heat transfer of the second heat transfer medium to the heat pump;
the step of heating the second heat transfer medium comprising at least a first heating step and a second heating step, the first and second heating steps both comprise a heat recovery step from exhaust fluids used in processes internal to the drying process, at least one of the first and second steps of heating the second heat transfer medium take place by heat recovery from exhaust air from the drying step.

According to first aspect of the invention, the step of drying comprises two different drying steps taking place in a first and a second climatic zone, the first heating step taking place by heat recovery from exhaust air extracted from the first climatic zone and the second heating step taking place by heat recovery from exhaust air extracted from the second climatic zone. According to one embodiment, the first and second heating steps occur in series, the first heating step occurring by heat recovery from exhaust air having lower dew point while the second heating step occurs by heat recovery from exhaust air having higher dew point.

According to an alternative embodiment, the second circuit comprises a bifurcation thus defining at least a first branch and a second branch in parallel. The first heating step and the second heating step taking place in parallel by means respectively of a first heat recovery unit arranged on the first branch and of a second heat recovery unit arranged on the second branch, the first branch being shaped so as to flow back into the second branch downstream the second heat recovery unit and upstream of the heat pump.

According to a second aspect of the invention, the first heating step occurs by heat recovery from exhaust water extracted from a cooling line of utilities associated to the drying process.

According to one aspect of the invention, the step of drying takes place in a corresponding climatic zone, the drying process comprising a step of adjusting a relative humidity value in the climatic zone; the step of adjusting comprises the step of:
- monitoring the relative humidity of air in the climatic zone;
- comparing the acquired data with a predefined range of relative humidity of air;
- adjusting the air flow rate destined to the heat recovery and the air flow rate vented in the environment to keep the level of relative humidity inside the climatic zone within a predefined range.

Further characteristics and advantages of the present invention will more fully emerge from the non-limiting description of a preferred but not exclusive embodiment of a drying unit and a drying process for drying pasta or snack products, as depicted in the attached figures in which:
- figures 1 and 2 illustrate a first embodiment of a drying unit for drying pasta or snack products, according to the present embodiment, respectively in a first and a second embodiment of the heat recovery units, in schematic views;
- figure 3 illustrates a second embodiment of a drying unit for drying pasta or snack products, according to the present embodiment, in schematic view;
- figure 4 illustrates a schematic view of a part (dryer) of the drying unit of figures 1-3.

With reference to the figures, number 1 is relative to a drying unit for drying pasta or snack products.

The drying unit 1 comprises a dryer 10. The dryer 10 is of the type having a circulating airflow which dries the products. The air contacts the products and absorbs humidity, becoming moist air. In the following, moist air which has dried the products will be referred to as exhaust air.

Preferably, the dryer 10 comprises at least one climatic zone 11. As known, the climatic zone 11 is a confined area under set values of working parameters, where the product is treated.

In particular, as said the dryer 10 serves to dry pasta or snacks products. Therefore, it typically comprises a plurality of climatic zones 11 (the number varies depending on different applications). Each climatic zone 11 is managed independently from the others, in particular is configured to work in predefined conditions of temperature and humidity.

Preferably, the dryer 10 comprises conveying means 12 for conveying the products through the dryer, in particular through at least the climatic zone 11. In this case, the dryer is of the dynamic type. The conveying means 12 may be realized according to a plurality of alternatives available to the skilled man. For example, the conveying means 12 may be a conveyor belt on which the products lay.

The dryer 10 is associated with a heat exchanger 20 in which the airflow is heated before drying the products. Preferably, the dryer 10 comprises the heat exchanger 20. In particular, the dryer 10 may comprise one or more heat exchanger 20 cooperating each other. The expression "heat exchanger 20" refers to the system achieving the heating of airflow before drying the products.

The drying unit 1 also comprises a heat pump 30 and a first circuit 40 of a first heat transfer medium. The first circuit 40 develops between the heat pump 30 and the heat exchanger 20 so that the first heat transfer medium transfers heat from the heat pump to the air in the heat exchanger 20. According to a preferred embodiment, the first heat transfer medium is water.

As known, the heat pump has a source side and a sink side. The heat pump extracts heat from the source side to transfer it to the sink side by means of a fluid of its internal thermal circuit.

Therefore, the first circuit 40 is on the sink side of the heat pump 30.

The drying unit 1 comprises a heat recovery system 50 associated with the heat pump 30. In particular, the heat recovery system 50 is arranged on the source side of the heat pump 30 so that the heat recovered serves as source heat for the heat pump 30, as will be further described below.

The heat recovery system 50 comprises a second circuit 51 of a second heat transfer medium. The second circuit 51 is associated with the heat pump 30 so that the second heat transfer medium transfers heat to it (to the fluid of its internal thermal circuit). In other words, the second heat transfer medium of the second circuit 51 is the heat source of the heat pump. The heat pump 30 serves to transfer heat from the heat recovery system 50 to the first circuit 40 and consequently to the heat exchanger 20 of the dryer 10.

The heat recovery system 50 comprises at least a first heat recovery unit 52 and a second heat recovery unit 53 associated with the second circuit 51 to heat the second heat transfer medium. According to the flow direction of the second heat transfer medium, the two heat recovery units 52, 53 are arranged upstream of the heat pump 30. Indeed, the second heat transfer medium gains heat from those units 52, 53 and transfers it to the heat pump 30.

The drying unit 1 comprises a first heat source line 60 and a second heat source line 70. Each heat source line 60, 70 conveys an exhaust fluid, that is a fluid which has been used in processes internal to the drying unit. The exhaust fluid is the heat source for recovery.

In particular, both heat sources are internal to the drying unit 1. This means that heat from processes internal to the drying unit is recovered. Each source line 60, 70 is configured to convey an exhaust fluid used in processes internal to the drying unit 1 to one of the heat recovery units 52, 53 for heating the second heat transfer medium.

Preferably, the first heat source line 60 passes through the first heat recovery unit 52 where the first heat source transfers heat to the second heat transfer medium of the second circuit 51.

Preferably, the second heat source line 70 passes through the second heat recovery unit 53 where the second heat source transfers heat to the second heat transfer medium of the second circuit 51.

At least one of the first and second heat source lines 60, 70 is an extraction line of exhaust air from the dryer 10. The corresponding heat source is the exhaust air.

In particular, the extraction line is configured to extract exhaust air from a corresponding climatic zone 11.

The proposed invention allows to recover energy from thermal sources at different temperature levels.

In particular, the first and second heat source lines 60, 70 and the first and second heat recovery units 52, 53 are mutually arranged so that heat recovery from the internal heat sources is performed according to an ascending order of temperature of the second heat transfer medium, depending on the entity of the heat sources available.

In other words, the proposed invention allows heat recovery with increasing temperature levels. The minimum configuration of two heat recovery units may be extended following the same principle.

This further deepens in a plurality of embodiments which are described below.

Preferably, the dryer 10 comprises at least a first and a second climatic zones 11.

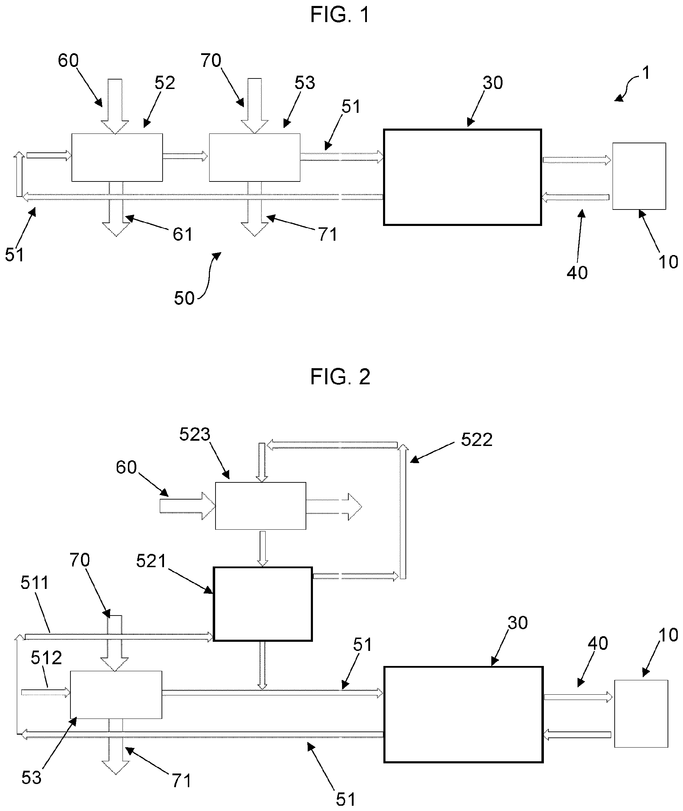

According to a first embodiment, illustrated in figures 1 and 2, the first heat source line 60 is an extraction line of exhaust air from the first climatic zone 11 and the second heat source line 70 is an extraction line of exhaust air from the second climatic zone 11. In other words, both the first and second heat recovery units 52, 53 recover heat from exhaust air coming from two different areas and/or processes of the dryer 10.

The first and second climatic zones 11 are configured to work in different conditions. This means that exhaust air extracted from the first climatic zone 11 has different parameters from exhaust air extracted from the second climatic zone 11. As known, exhaust air from the drying process is moist air (air with water vapor). A key parameter for moist air/exhaust air is the dew point, that is the temperature to which air must be cooled for water vapor in it to condense into dew.

Preferably, exhaust air extracted from the two climatic zones 11 has different dew point. The heat source lines 60, 70 and the heat recovery units 52, 53 are mutually arranged so that exhaust air with lower dew point is led to the first heat recovery unit 52 while exhaust air with higher dew point is led the second recovery unit 53.

For example, the first climatic zone 11 is destined to pre-drying the products (therefore it's a pre-drying zone) while the second climatic zone 11 serves to drying the products (therefore it's a drying zone). In this case, the exhaust air from the pre-drying process has lower dew point than the exhaust air from the drying process. Therefore, the exhaust air from the pre-drying zone 11 transfers heat to the second heat transfer medium in the first heat recovery unit 52. The exhaust air from the drying zone 11 transfers heat to the second heat transfer medium in the second heat recovery unit 53.

According to a first embodiment of the heat recovery units, illustrated in figure 1, the first and second heat recovery units 52, 53 are arranged in series along the second circuit 51. This solution allows to recover the majority of the latent heat of evaporation used in the different drying processes.

The first heat recovery unit 52 (which is the unit receiving exhaust air with lower dew point) is located upstream of the second heat recovery unit 53 (which is the unit receiving exhaust air with higher dew point) along the second circuit 51. Therefore, generally speaking, the heat recovery units 52, 53 are sequentially arranged in ascending order of dew point of exhaust air from which they recover heat, according to the direction of flow of the second heat transfer medium in the second circuit.

In other words, the second heat transfer medium of the second circuit 51 receives heat from exhaust air with lower dew point in the first heat recovery unit 52 and then from exhaust air with higher dew point in the second heat recovery unit 53. This minimum configuration may be extended for multiple heat recovery units 52, 53, arranged on the second circuit 51 in order of increasing dew points.

In this embodiment, the second heat transfer medium receives heat recovered from two heat sources in sequence.

This embodiment is particularly advantageous when it is possible to use a heat pump that operates with a high values of temperature differences between source and sink, without impacting its COP.

Preferably, the first and second heat recovery units 52, 53 are in the form of heat exchangers.

In a preferred embodiment, the second heat transfer medium is water. The first and second heat recovery unit 52, 53 are air/water heat exchangers.

According to a second embodiment of the heat recovery units, illustrated in figure 2, the second circuit 51 comprises a bifurcation thus defining at least a first branch 511 and a second branch 512 in parallel. The first heat recovery unit 52 is arranged on the first branch 511 and the second heat recovery unit 53 is arranged on the second branch 512. The first branch 511 is shaped so as to flow back into the second branch 512 downstream the second heat recovery unit 53 and upstream of the heat pump 30.

In this case, the first heat recovery unit 52 comprises an additional heat pump 521 associated with the first branch 511 to transfer heat to the second heat transfer medium, a third circuit 522 of a third heat transfer medium associated to the heat pump 30 as heat source and a heat exchanger 523 arranged on the third circuit 522 upstream of the heat pump 30. The heat exchanger 523 is associated with one of the heat source lines 60, 70 so as to transfer heat to the third heat transfer medium.

According to the illustrated embodiment, the first heat source line is configured to carry exhaust air having lower dew point with respect to exhaust air carried on the second heat source line 70. Therefore, the heat exchanger 523 is associated with the first heat source line 60 to recover heat from the exhaust air having lower dew point.

The third heat transfer medium then transfers heat via the additional heat pump 521 to the second heat transfer medium of the first branch 511.

In this embodiment, the second heat transfer medium receives heat recovered from two heat sources in parallel.

This embodiment is particularly advantageous when heat pumps can work with a limited temperature difference from source and sink so as not to comprise excessively the COP. In these cases, a solution as the latter described with two or more different heat pumps are necessary to recover energy from extraction of moist air having different dew points.

In a preferred embodiment, the second heat transfer medium is water, as well as the third heat transfer medium. The heat exchanger 523 of the first recovery unit 52 is an air/water heat exchanger and the second recovery unit 53 is an air/water heat exchanger.

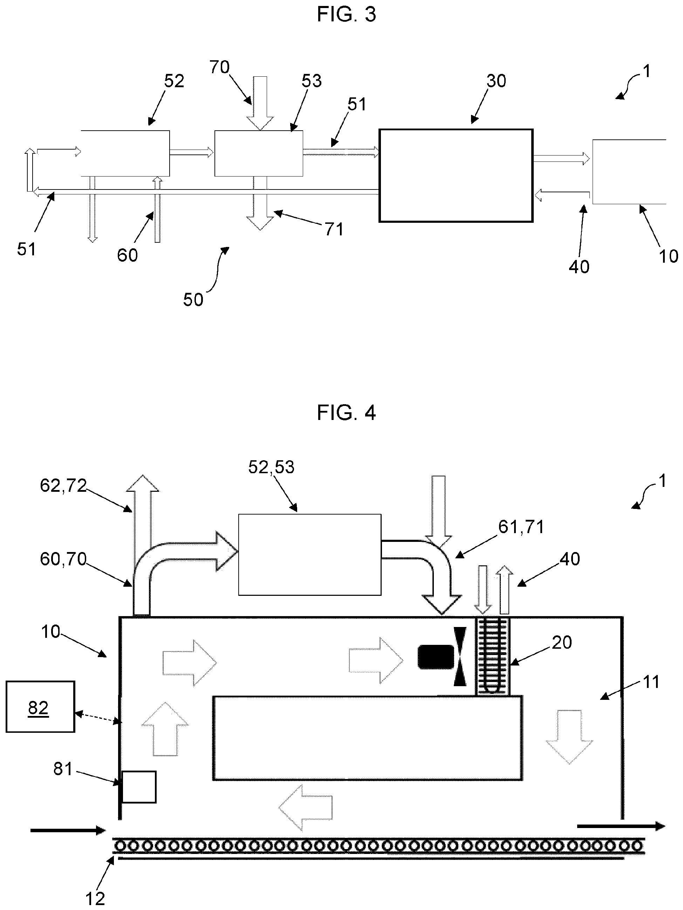

According to a second embodiment, illustrated in figure 3, the first heat source line 60 is an extraction line of exhaust water from a cooling line of utilities of the drying unit 1. The exhaust water is therefore the first heat source. For exhaust water here is intended water which has already been used in cooling processes internal to the drying unit 1.

The extraction line may be a different line from the cooling line, a branch of the cooling line or a part of the cooling line.

The utilities which are typically cooled during the operational condition of a drying unit 1 are several and different depending on the specific application. For example, the utilities may be press, vacuum pump, head, final cooler, dryer stabilization zone, etc.

The second heat source line 70 is an extraction line of exhaust air from the dryer 10.

Preferably, the first and second heat recovery units 52, 53 are arranged in series along the second circuit 51.

The first heat recovery unit 52 (which is the unit receiving exhaust water) is located upstream of the second heat recovery unit 53 (which is the unit receiving exhaust air) along the second circuit 51. In other words, the second heat transfer medium of the second circuit 51 receives heat from exhaust water in the first heat recovery unit 52 and then from exhaust air in the second heat recovery unit 53.

In this embodiment, the second heat transfer medium receives heat recovered from two heat sources in sequence.

This embodiment is particularly advantageous when the setpoint of temperature of the first heat transfer medium exiting the heat pump 30 is lower than the other embodiments, thus enabling to reach low temperatures for the second heat transfer medium exiting the heat pump 30 at the source side.

In a preferred embodiment, the second heat transfer medium is water. The first heat recovery unit 52 is a water/water heat exchanger, while the second heat recovery unit 53 is an air/water heat exchanger.

In particular, the air/water heat exchanger mentioned in the text are condensing heat exchangers, therefore they have a secondary outlet for condensed water.

According to one embodiment, the heat source line 60, 70 in the form of an extraction line of exhaust air (in the following, simply referred to as "the extraction line 60, 70 of exhaust air) comprises a reinjection line 61, 71 of the air into the dryer 10, in particular in the corresponding climatic zone 11. The reinjection line 61, 71 develops so as to pass through the heat exchanger 20.

In particular, the reinjection line 61, 71 develops downstream the heat recovery unit 52, 53 to convey the airflow back to the dryer 10.

According to one embodiment, the extraction line 60, 70 of exhaust air comprises a vent route 62, 72 for venting exhaust air in the environment. Preferably, the dryer 10 comprises a system for adjusting a relative humidity value in the climatic zone 11.

The system comprises at least one relative humidity sensor 81 for monitoring the relative humidity of air in the climatic zone 11 and a control unit 82 configured to receive the relative humidity data from the relative humidity sensor 81, compare those data with a predefined range and adjust the air flow rate towards the heat recovery unit 52, 53 and the air flow rate vented in the environment to keep the level of relative humidity inside the climatic zone 11 within a predefined range.

In particular, the control unit 82 is configured to increase the air flow rate vented in the environment (thus reducing the air flow rate of air sent to the heat recovery unit) when the inlet temperature of the second heat transfer medium in the heat pump 30 is excessive.

Indeed, the COP of the system depends on thermal power and input and output temperatures of the first heat transfer medium on the sink side and on input and output temperatures of the second heat transfer medium on the source side. From the COP it is possible to obtain the necessary thermal power of the recovery system and therefore the flow rate of fluid on the source side (the second heat transfer medium 51).

If the power of energy recovery was in excess of what the heat pump needed (higher water return temperatures), venting would be activated. This solution provides for greater flexibility and makes the drying process independent from the functioning of the heat pump 30.

It is clear from the description above that the presence of two heat recovery units and related components is the minimum configuration. It is also possible to envisage a plurality of heat recovery units which follow the same principle of heat recovery in order of increasing temperature levels. In case of heat recovery from exhaust air from different climatic zones of the dryer, a plurality of heat recovery units shall follow the same principle of heat recovery in order of increasing dew points. Also, a combination between different embodiments (for example, having heat recovery from two extraction lines of exhaust air from the dryer and one extraction line of exhaust water from the cooling line of utilities of the drying unit 1).

A drying process for drying pasta or snack products is also object of the present invention. The drying process is advantageously implemented by a drying unit as described above.

The drying process comprises a step of drying the products by means of a circulating airflow. This step preferably takes place in a dryer 10 of the type with circulating airflow, in particular in a climatic zone 11 of the dryer 10. As known, the climatic zone 11 is a confined area under set values of working parameters, where the product is treated.

The step of drying the products causes the air to collect moisture from the products, thus becoming moist air. In the following, moist air which has dried the products will be referred to as exhaust air.

The drying process comprises a step of heating the circulating airflow before the step of drying. This step takes place in a heat exchanger 20. The drying process comprises a step of circulating a first heat transfer medium in a first circuit 40. The step of heating the circulating airflow occurs by heat transfer from the first heat transfer medium to the circulating airflow.

In particular, the first circuit 40 develops in a loop between a heat pump 30 and the heat exchanger 20 so that the first heat transfer medium receives heat from the heat pump and transfers it to the airflow in the heat exchanger 20.

According to a preferred embodiment, the first heat transfer medium is water.

As known, the heat pump has a source side and a sink side. The heat pump extracts heat from the source side to transfer it to the sink side by means of a fluid of its internal thermal circuit.

Therefore, the first circuit 40 is on the sink side of the heat pump 30.

The drying process comprises a step of circulating a second heat transfer medium in a second circuit 51. The second circuit 51 is associated with the heat pump 30 so that the second heat transfer medium transfers heat to the first heat transfer medium via the heat pump 30.

In other words, the second heat transfer medium of the second circuit 51 is the heat source of the heat pump. The heat pump 30 serves to transfer heat from the heat recovery system 50 to the first circuit 40 and consequently to the heat exchanger 20 of the dryer 10.

The drying process comprises a step of heating the second heat transfer medium. This step occurs before heat transfer of the second heat transfer medium to the heat pump 30.

The step of heating the second heat transfer medium comprises at least a first heating step and a second heating step. The distinction in "first" and "second" step does not forcedly imply a temporal link between the two steps.

The first and second heating steps of the second heat transfer medium both comprise a heat recovery step from exhaust fluids used in processes internal to the drying process.

This means that both heat sources of the two heating recovery steps are internal to the drying process.

At least one of the first and second steps of heating the second heat transfer medium take place by heat recovery from exhaust air extracted from the dryer 10.

The proposed invention allows to recover energy from thermal sources at different temperature levels. In particular, heat recovery occurs from increasing temperature levels. This principle may be applied also with multiple heat recoveries.

This further deepens in a plurality of detailed embodiments which are described below.

Preferably, the dryer 10 comprises at least a first and a second climatic zone 11.

According to a first embodiment, the first heating step takes place by heat recovery from exhaust air extracted from the first climatic zone 11 and the second heating step takes place by heat recovery from exhaust air extracted from the second climatic zone 11.

The first and second climatic zones 11 are configured to work in different conditions. This means that exhaust air extracted from the first climatic zone 11 has different parameters from exhaust air extracted from the second climatic zone 11. As known, exhaust air from the drying process is moist air (air with water vapor). A key parameter for moist air/exhaust air is the dew point, that is the temperature to which air must be cooled for water vapor in it to condense into dew.

Therefore, exhaust air extracted from the two different climatic zones 11 has different dew point.

For example, the first climatic zone 11 is destined to pre-drying the products (therefore it's a pre-drying zone) while the second climatic zone 11 serves to dry the products (therefore it's a drying zone). In this case, the exhaust air from the pre-drying process has lower dew point than the exhaust air from the drying process. Therefore, the second heat transfer medium is heated by heat recovery first from exhaust air from the pre-drying zone 11 and then from exhaust air from the drying zone 11.

According to a first embodiment of the heating step of the second heat transfer medium, the first and second heating steps occur in series. This means that the second heat transfer medium undergoes two heating in sequence.

This solution allows to recover most of the latent heat of evaporation used in the different drying processes.

Preferably, the first heating step occurs by heat recovery from exhaust air having lower dew point while the second heating step occurs by heat recovery from exhaust air having higher dew point.

Therefore, generally speaking, the step of heating the second heat transfer medium occurs with a plurality of sequential heat recovery from exhaust air having ascending order of dew point. This means that the same principle applies with two or more heat recoveries.

In this embodiment, the second heat transfer medium receives heat recovered from two or more heat sources in sequence.

This embodiment is particularly advantageous when it is possible to use a heat pump that operates with a high difference of temperature between source and sink, without impacting its COP.

Preferably, the heat recovery takes place in heat exchangers.

In a preferred embodiment, the second heat transfer medium is water. The heat recovery takes place in air/water heat exchangers.

According to a second embodiment of the step of heating the second heat transfer medium, the second circuit 51 comprises a bifurcation thus defining at least a first branch 511 and a second branch 512 in parallel. The first heating step and the second heating step occur in parallel by means respectively of a first heat recovery unit 52 arranged on the first branch 511 and of a second heat recovery unit 53 arranged on the second branch 512. The first branch 511 is shaped so as to flow back into the second branch 512 downstream the second heat recovery unit 53 and upstream of the heat pump 30.

In this case, the first heat recovery unit 52 comprises an additional heat pump 521 associated with the first branch 511 to transfer heat to the second heat transfer medium, a third circuit 522 of a third heat transfer medium associated to the heat pump 30 as heat source and a heat exchanger 523 arranged on the third circuit 522 upstream of the heat pump 30.

Therefore, the first heating step of the second heat transfer medium takes place via the additional heat pump, which in turn receives the source heat from the third heat transfer medium which in turn receives heat from heat recovery from exhaust air in the heat exchanger 523. Preferably, the exhaust air has the lower dew point.

In this embodiment, the second heat transfer medium receives heat recovered from two heat sources in parallel.

This embodiment is particularly advantageous when heat pumps can work with a limited temperature difference from source and sink so as not to comprise excessively the COP. In these cases, a solution as the latter described with two or more different heat pumps are necessary to recover energy from extraction of moist air having different dew points.

In a preferred embodiment, the second heat transfer medium is water, as well as the third heat transfer medium. The heat exchanger 523 of the first recovery unit 52 is an air/water heat exchanger and the second recovery unit 53 is an air/water heat exchanger.

According to a second embodiment, the first heating step occurs by heat recovery from exhaust water extracted from a cooling line of utilities. The utilities are internal to the drying process.

For exhaust water here is intended water which has already been exchanged heat to utilities to be cooled.

The second heat step occurs as described above by heat recovery from exhaust air.

This embodiment is particularly advantageous when the setpoint of temperature of the first heat transfer medium exiting the heat pump 30 is lower than the other embodiments, thus enabling to reach low temperatures for the second heat transfer medium exiting the heat pump 30 at the source side.

In a preferred embodiment, the second heat transfer medium is water. The first heat recovery unit 52 is a water/water heat exchanger, while the second heat recovery unit 53 is an air/water heat exchanger.

In particular, the air/water heat exchanger mentioned in the whole text are condensing heat exchangers, therefore they have a secondary outlet for condensed water.

According to one embodiment, the drying process comprises a step of reinjecting the air into the dryer 10.

According to one embodiment, the drying process comprises a step of adjusting a relative humidity value in the climatic zone 11 of the dryer 10. The step of adjusting comprises the step of:
- monitoring the relative humidity of air in the climatic zone 11;
- comparing the acquired data with a predefined range of relative humidity of air;
- adjusting the air flow rate destined to the heat recovery and the air flow rate vented in the environment to keep the level of relative humidity inside the climatic zone 11 within a predefined range.

In particular, the step of adjusting the air flow rate takes place by increasing the air flow rate vented in the environment (thus reducing the air flow rate of air sent to the heat recovery unit) when the inlet temperature of the second heat transfer medium in the heat pump 30 is excessive.

Indeed, the COP of the system depends on thermal power and difference of temperature on the sink side and on input and output temperatures of the second heat transfer medium on the source side. From the COP it is possible to obtain the necessary thermal power of the recovery system and therefore the flow rate of fluid on the source side (the second heat transfer medium 51). If the power of energy recovery was in excess of what the heat pump needed (higher water return temperatures), venting would be activated.

This solution provides for greater flexibility and makes the drying process independent from the functioning of the heat pump 30.

The characteristics and the advantages of the drying unit and the drying process for drying pasta or snack products, according to the present invention, are clear, as are the advantages.

In particular, by adopting the recovery system described is possible to drastically reduce the energy absorbed by 60÷70% with respect to a dryer not implementing energy recovery. A great reduction of CO2 emissions is also achieved.

The proposed solution allows via a heat pump to recover energy from different thermal sources, internal to the drying processes, at different levels of temperatures, typical of the dryers for pasta and snack products.

In the embodiment in which two different extractions of exhaust air is performed, the solution proposed allows to organize the heat recovery on the basis of the dew point of the exhaust air, with two different embodiments of the heat recovery units depending on the type of heat pump available.

When possible, according to the temperature parameters desired for the drying process, with the proposed solution is possible to perform heat recovery from the cooling water used in the cooling line of utilities.

Moreover, the modulation and balancing system of the air flow rate extracted to the heat recovery units and the environment allows to regulate the humidity and the temperature of air in the dryer thanks to the sensors.

## Claims

1. A drying unit (1) for drying pasta or snack products, comprising:
a dryer (10) of the type having a circulating airflow;
a heat exchanger (20) associated with the dryer (10) so that the airflow is heated before drying the products;
a heat pump (30);
a first circuit (40) of a first heat transfer medium, said first circuit (40) developing between the heat pump (30) and the heat exchanger (20) so that the first heat transfer medium receives heat from the heat pump and transfers it to the airflow in the heat exchanger (20);
**characterized in that** the drying unit (1) comprises a heat recovery system (50) comprising:
- a second circuit (51) of a second heat transfer medium, said second circuit (51) being associated with the heat pump (30) so that the second heat transfer medium transfers heat to it;
- at least a first and a second heat recovery unit (52, 53) arranged on the second circuit (51) to heat the second heat transfer medium and upstream of the heat pump (30);
- at least a first and a second heat source line (60, 70), each source line (60, 70) being configured to convey an exhaust fluid used in processes internal to the drying unit (1) to one of the heat recovery units (52, 53) for heating the second heat transfer medium,
at least one of the first and second heat source lines (60, 70) being an extraction line of exhaust air from the dryer (10).

2. The drying unit (1) according to claim 1, wherein the dryer (10) comprises at least a first and a second climatic zone (11) configured to perform a drying treatment of the products with different parameters, the first and second heat source lines (60, 70) being extraction lines of exhaust air from the first and second climatic zones (11).

3. The drying unit (1) according to claim 2, wherein the first heat source line (60) is configured to carry exhaust air having lower dew point with respect to exhaust air carried on the second heat source line (70), the first heat recovery unit (52) being arranged in series and upstream of the second heat recovery unit (53), the first heat recovery unit (52) being associated with the first heat source line (60, 70) so that heat recovery is performed in ascending order of dew point of the exhaust air.

4. The drying unit (1) according to claim 2, wherein the second circuit (51) comprises a bifurcation thus defining at least a first branch (511) and a second branch (512) in parallel, the first heat recovery unit (52) being arranged on the first branch (511) and the second heat recovery unit (53) being arranged on the second branch (512), the first branch (511) being shaped so as to flow back into the second branch (512) downstream the second heat recovery unit (53) and upstream of the heat pump (30).

5. The drying unit (1) according to claim 4, wherein the first heat recovery unit (52) comprises:
- an additional heat pump (521) associated with the first branch (511) to transfer heat to the second heat transfer medium;
- a third circuit (522) of a third heat transfer medium associated to the heat pump (30) as heat source;
- a heat exchanger (523) arranged on the third circuit (522) upstream of the heat pump (30), the heat exchanger (523) being associated with one of the heat source lines (60, 70) so as to transfer heat to the third heat transfer medium.

6. The drying unit (1) according to claim 1, wherein the first heat source line (60) is an extraction line of exhaust water from a cooling line of utilities of the drying unit (1), while the second heat source line (70) is an extraction line of exhaust air from the dryer (10).

7. The drying unit (1) according to any one of the preceding claims, wherein the heat source line (60, 70) in the form of an extraction line of exhaust air comprises a vent route (62, 72) for venting exhaust air in the environment.

8. The drying unit (1) according to claim 7, wherein the dryer (10) comprises at least one climatic zone (11) where the products are dried and a system (81, 82) for adjusting a relative humidity value in said at least climatic zone (11), the system comprising at least one relative humidity sensor (81) for monitoring the relative humidity of air in the climatic zone (11) and a control unit (82) configured at least to:
- receive the relative humidity data from the relative humidity sensor (81);
- compare those data with a predefined range;
- adjust the air flow rate towards the heat recovery unit (52, 53) and the air flow rate vented in the environment to keep the level of relative humidity inside the climatic zone (11) within the predefined range.

9. A drying process for drying pasta or snack products, comprising the steps of:
drying the products by means of a circulating airflow, the step of drying causing the air to collect moisture from the products, thus becoming exhaust air;
heating the circulating airflow before the step of drying, the step of heating taking place in a heat exchanger (20);
circulating a first heat transfer medium in a first circuit (40), the step of heating the circulating airflow occurs by heat transfer from the first heat transfer medium to the circulating airflow, said first circuit (40) developing between a heat pump (30) and the heat exchanger (20) so that the first heat transfer medium receives heat from the heat pump and transfers it to the airflow in the heat exchanger (20);
**characterized in that** the drying process comprises the steps of:
circulating a second heat transfer medium in a second circuit (51), said second circuit (51) being associated with the heat pump (30) so that the second heat transfer medium transfers heat to the first heat transfer medium via the heat pump (30).
heating the second heat transfer medium circulating in the second circuit (51), before heat transfer of the second heat transfer medium to the heat pump (30);
the step of heating the second heat transfer medium comprising at least a first heating step and a second heating step, the first and second heating steps both comprise a heat recovery step from exhaust fluids used in processes internal to the drying process, at least one of the first and
second steps of heating the second heat transfer medium taking place by heat recovery from exhaust air of the drying step.

10. The drying process according to claim 9, wherein the step of drying comprises two different drying steps taking place in a first and a second climatic zone, the first heating step taking place by heat recovery from exhaust air extracted from the first climatic zone (11) and the second heating step taking place by heat recovery from exhaust air extracted from the second climatic zone (11).

11. The drying process according to claim 10, wherein the first and second heating steps occur in series, the first heating step occurring by heat recovery from exhaust air having lower dew point while the second heating step occurs by heat recovery from exhaust air having higher dew point.

12. The drying process according to claim 10, wherein the second circuit (51) comprises a bifurcation thus defining at least a first branch (511) and a second branch (512) in parallel; the first heating step and the second heating step taking place in parallel by means respectively of a first heat recovery unit (52) arranged on the first branch (511) and of a second heat recovery unit (53) arranged on the second branch (512), the first branch (511) being shaped so as to flow back into the second branch (512) downstream the second heat recovery unit (53) and upstream of the heat pump (30).

13. The drying process according to claim 9, wherein the first heating step occurs by heat recovery from exhaust water extracted from a cooling line of utilities associated to the drying process.

14. The drying process according to any one of claims 9 to 13, wherein the step of drying takes place in a corresponding climatic zone (11), the drying process comprising a step of adjusting a relative humidity value in the climatic zone (11); the step of adjusting comprises the step of:
- monitoring the relative humidity of air in the climatic zone (11);
- comparing the acquired data with a predefined range of relative humidity of air;
- adjusting the air flow rate destined to the heat recovery and the air flow rate vented in the environment to keep the level of relative humidity inside the climatic zone (11) within a predefined range.

## Patentansprüche

1. Trocknungseinheit (1) zum Trocknen von Teigwaren oder Snackprodukten, umfassend:
einen Trockner (10) vom Typ mit zirkulierendem Luftstrom;
einen Wärmetauscher (20), der mit dem Trockner (10) assoziiert ist, sodass der Luftstrom vor dem Trocknen der Produkte erwärmt wird;
eine Wärmepumpe (30);
einen ersten Kreislauf (40) eines ersten Wärmeübertragungsmediums, wobei sich der erste Kreislauf (40) zwischen der Wärmepumpe (30) und dem Wärmetauscher (20) entwickelt, sodass das erste Wärmeübertragungsmedium von der Wärmepumpe Wärme empfängt und diese an den Luftstrom im Wärmetauscher (20) überträgt;
**dadurch gekennzeichnet, dass** die Trocknungseinheit (1) ein Wärmerückgewinnungssystem (50) umfasst, das Folgendes umfasst:
- einen zweiten Kreislauf (51) eines zweiten Wärmeübertragungsmediums, wobei der zweite Kreislauf (51) mit der Wärmepumpe (30) assoziiert ist, sodass das zweite Wärmeübertragungsmedium Wärme an diese überträgt;
- mindestens eine erste und eine zweite Wärmerückgewinnungseinheit (52, 53), die zum Erwärmen des zweiten Wärmeübertragungsmediums am zweiten Kreislauf (51) und stromaufwärts der Wärmepumpe (30) angeordnet sind;
- mindestens eine erste und eine zweite Wärmequellenleitung (60, 70), wobei jede Quellenleitung (60, 70) so ausgelegt ist, dass sie ein in Verfahren innerhalb der Trocknungseinheit (1) verwendetes Ablassfluid zu einer der Wärmerückgewinnungseinheiten (52, 53) zum Erwärmen des zweiten Wärmeübertragungsmediums befördert,
wobei mindestens eine der ersten und zweiten Wärmequellenleitung (60, 70) eine Extraktionsleitung für Abluft aus dem Trockner (10) ist.

2. Trocknungseinheit (1) nach Anspruch 1, wobei der Trockner (10) mindestens eine erste und eine zweite Klimazone (11) umfasst, die so ausgelegt sind, dass sie eine Trocknungsbehandlung der Produkte mit unterschiedlichen Parametern durchführen, wobei die erste und die zweite Wärmequellenleitung (60, 70) Extraktionsleitungen für Abluft aus der ersten und zweiten Klimazone (11) sind.

3. Trocknungseinheit (1) nach Anspruch 2, wobei die erste Wärmequellenleitung (60) so ausgelegt ist, dass sie Abluft mit einem niedrigeren Taupunkt in Bezug auf die in der zweiten Wärmequellenleitung (70) mitgeführte Abluft führt, wobei die erste Wärmerückgewinnungseinheit (52) in Reihe und stromaufwärts der zweiten Wärmerückgewinnungseinheit (53) angeordnet ist, wobei die erste Wärmerückgewinnungseinheit (52) mit der ersten Wärmequellenleitung (60, 70) assoziiert ist, sodass Wärmerückgewinnung in aufsteigender Reihenfolge des Taupunkts der Abluft durchgeführt wird.

4. Trocknungseinheit (1) nach Anspruch 2, wobei der zweite Kreislauf (51) eine Gabelung umfasst, wodurch mindestens ein erster Zweig (511) und ein zweiter Zweig (512) parallel definiert werden, wobei die erste Wärmerückgewinnungseinheit (52) am ersten Zweig (511) angeordnet ist und die zweite Wärmerückgewinnungseinheit (53) am zweiten Zweig (512) angeordnet ist, wobei der erste Zweig (511) so ausgeformt ist, dass er in den zweiten Zweig (512) stromabwärts der zweiten Wärmerückgewinnungseinheit (53) und stromaufwärts der Wärmepumpe (30) zurückströmt.

5. Trocknungseinheit (1) nach Anspruch 4, wobei die erste Wärmerückgewinnungseinheit (52) Folgendes umfasst:
- eine zusätzliche Wärmepumpe (521), die mit dem ersten Zweig (511) assoziiert ist, um Wärme an das zweite Wärmeübertragungsmedium zu übertragen;
- einen dritten Kreislauf (522) eines dritten Wärmeübertragungsmediums, das mit der Wärmepumpe (30) als Wärmequelle assoziiert ist;
- einen Wärmetauscher (523), der im dritten Kreislauf (522) stromaufwärts der Wärmepumpe (30) angeordnet ist, wobei der Wärmetauscher (523) mit einer der Wärmequellenleitungen (60, 70) assoziiert ist, um Wärme an das dritte Wärmeübertragungsmedium zu übertragen.

6. Trocknungseinheit (1) nach Anspruch 1, wobei die erste Wärmequellenleitung (60) eine Extraktionsleitung für Abwasser aus einer Kühlleitung von Versorgungseinrichtungen der Trocknungseinheit (1) ist, während die zweite Wärmequellenleitung (70) eine Extraktionsleitung für Abluft aus dem Trockner (10) ist.

7. Trocknungseinheit (1) nach einem der vorhergehenden Ansprüche, wobei die Wärmequellenleitung (60, 70) in Form einer Extraktionsleitung für Abluft einen Entlüftungsweg (62, 72) zum Entlüften der Abluft in die Umgebung umfasst.

8. Trocknungseinheit (1) nach Anspruch 7, wobei der Trockner (10) mindestens eine Klimazone (11) umfasst, in der die Produkte getrocknet werden, und ein System (81, 82) zum Einstellen eines Wertes der relativen Luftfeuchtigkeit in der mindestens einen Klimazone (11), wobei das System mindestens einen Sensor (81) für relative Luftfeuchtigkeit zur Überwachung der relativen Luftfeuchtigkeit in der Klimazone (11) und eine Steuereinheit (82) umfasst, die mindestens zu Folgendem ausgelegt ist:
- Empfangen der Daten zur relativen Luftfeuchtigkeit vom Sensor (81) für relative Luftfeuchtigkeit;
- Vergleichen dieser Daten mit einem vordefinierten Bereich;
- Einstellen der Luftstromrate hinführend zur Wärmerückgewinnungseinheit (52, 53) und der in die Umgebung entlüftete Luftstromrate, um den relativen Luftfeuchtigkeitsgrad in der Klimazone (11) innerhalb des vordefinierten Bereichs zu halten.

9. Trocknungsverfahren zum Trocknen von Teigwaren oder Snackprodukten, umfassend die folgenden Schritte:
Trocknen der Produkte mittels eines zirkulierenden Luftstroms, wobei der Schritt zum Trocknen bewirkt, dass die Luft Feuchtigkeit von den Produkten aufnimmt und so zu Abluft wird;
Erwärmen des zirkulierenden Luftstroms vor dem Schritt zum Trocknen, wobei der Schritt zum Erwärmen in einem Wärmetauscher (20) stattfindet;
Zirkulieren eines ersten Wärmeübertragungsmediums in einem ersten Kreislauf (40), wobei der Schritt zum Erwärmen des zirkulierenden Luftstroms durch Wärmeübertragung vom ersten Wärmeübertragungsmedium auf den zirkulierenden Luftstrom erfolgt, wobei sich der erste Kreislauf (40) zwischen einer Wärmepumpe (30) und
dem Wärmetauscher (20) entwickelt, sodass das erste Wärmeübertragungsmedium von der Wärmepumpe Wärme empfängt und diese an den Luftstrom im Wärmetauscher (20) überträgt;
**dadurch gekennzeichnet, dass** das Trocknungsverfahren die folgenden Schritte umfasst:
Zirkulieren eines zweiten Wärmeübertragungsmediums in einem zweiten Kreislauf (51), wobei der zweite Kreislauf (51) mit der Wärmepumpe (30) assoziiert ist, sodass das zweite Wärmeübertragungsmedium über die Wärmepumpe (30) Wärme an das erste Wärmeübertragungsmedium überträgt;
Erwärmen des im zweiten Kreislauf (51) zirkulierenden zweiten Wärmeübertragungsmediums vor der Wärmeübertragung des zweiten Wärmeübertragungsmediums an die Wärmepumpe (30);
wobei der Schritt zum Erwärmen des zweiten Wärmeübertragungsmediums mindestens einen ersten Schritt zum Erwärmen und einen zweiten Schritt zum Erwärmen umfasst, wobei sowohl der erste als auch der zweite Schritt zum Erwärmen einen Schritt zur Wärmerückgewinnung aus Ablassfluiden umfassen, die in Verfahren innerhalb des Trocknungsverfahrens verwendet werden, wobei mindestens einer des ersten und zweiten Schritts zum Erwärmen des zweiten Wärmeübertragungsmediums durch Wärmerückgewinnung aus der Abluft aus dem Schritt zum Trocknen erfolgt.

10. Trocknungsverfahren nach Anspruch 9, wobei der Schritt zum Trocknen zwei verschiedene Schritte zum Trocknen umfasst, die in einer ersten und einer zweiten Klimazone stattfinden, wobei der erste Schritt zum Erwärmen durch Wärmerückgewinnung aus der aus der ersten Klimazone (11) extrahierten Abluft erfolgt und der zweite Schritt zum Erwärmen durch Wärmerückgewinnung aus der aus der zweiten Klimazone (11) extrahierten Abluft erfolgt.

11. Trocknungsverfahren nach Anspruch 10, wobei der erste und der zweite Schritt zum Erwärmen in Reihe erfolgen, wobei der erste Schritt zum Erwärmen durch Wärmerückgewinnung aus Abluft mit niedrigerem Taupunkt erfolgt, während der zweite Schritt zum Erwärmen durch Wärmerückgewinnung aus Abluft mit höherem Taupunkt erfolgt.

12. Trocknungsverfahren nach Anspruch 10, wobei der zweite Kreislauf (51) eine Gabelung umfasst, wodurch mindestens ein erster Zweig (511) und ein zweiter Zweig (512) parallel definiert werden, wobei der erste Schritt zum Erwärmen und der zweite Schritt zum Erwärmen parallel erfolgen, mittels einer jeweiligen ersten Wärmerückgewinnungseinheit (52), angeordnet am ersten Zweig (511), und einer zweiten Wärmerückgewinnungseinheit (53), angeordnet am zweiten Zweig (512), wobei der erste Zweig (511) so ausgeformt ist, dass er in den zweiten Zweig (512) stromabwärts der zweiten Wärmerückgewinnungseinheit (53) und stromaufwärts der Wärmepumpe (30) zurückströmt.

13. Trocknungsverfahren nach Anspruch 9, wobei der erste Schritt zum Erwärmen durch Wärmerückgewinnung aus Abwasser erfolgt, das aus einer Kühlleitung von dem Trocknungsverfahren zugeordneten Versorgungseinrichtungen extrahiert wird.

14. Trocknungsverfahren nach einem der Ansprüche 9 bis 13, wobei der Schritt zum Trocknen in einer entsprechenden Klimazone (11) stattfindet, wobei das Trocknungsverfahren einen Schritt zum Einstellen eines Wertes der relativen Luftfeuchtigkeit in der Klimazone (11) umfasst, wobei der Schritt zum Einstellen die folgenden Schritte umfasst:
- Überwachen der relativen Luftfeuchtigkeit in der Klimazone (11);
- Vergleichen der erfassten Daten mit einem vordefinierten Bereich der relativen Luftfeuchtigkeit;
- Einstellen der für die Wärmerückgewinnung bestimmten Luftstromrate und der in die Umgebung entlüftete Luftstromrate, um den relativen Luftfeuchtigkeitsgrad in der Klimazone (11) innerhalb eines vordefinierten Bereichs zu halten.

## Revendications

1. Unité de séchage (1) pour sécher des pâtes ou des snacks, comprenant :
un séchoir (10) du type ayant un flux d'air circulant ;
un échangeur de chaleur (20) associé au séchoir (10) de sorte que le flux d'air est chauffé avant de sécher les produits ;
une pompe à chaleur (30) ;
un premier circuit (40) d'un premier milieu de transfert de chaleur, ledit premier circuit (40) se développant entre la pompe à chaleur (30) et l'échangeur de chaleur (20) de sorte que le premier milieu de transfert de chaleur reçoit de la chaleur de la pompe à chaleur et la transfère au flux d'air dans l'échangeur de chaleur (20) ;
**caractérisée en ce que** l'unité de séchage (1) comprend un système de récupération de chaleur (50) comprenant :
- un second circuit (51) d'un second milieu de transfert de chaleur, ledit second circuit (51) étant associé à la pompe à chaleur (30) de sorte que le second milieu de transfert de chaleur lui transfère de la chaleur ;
- au moins une première et une seconde unité de récupération de chaleur (52, 53) agencées sur le second circuit (51) pour chauffer le second milieu de transfert de chaleur et en amont de la pompe à chaleur (30) ;
- au moins une première et une seconde ligne de source de chaleur (60, 70), chaque ligne de source (60, 70) étant configurée pour acheminer un fluide d'échappement utilisé dans les procédés internes à l'unité de séchage (1) vers l'une des unités de récupération de chaleur (52, 53) pour chauffer le second milieu de transfert de chaleur,
au moins l'une des première et seconde lignes de source de chaleur (60, 70) étant une ligne d'extraction d'air vicié à partir du séchoir (10).

2. Unité de séchage (1) selon la revendication 1, dans laquelle le séchoir (10) comprend au moins une première et une seconde zone climatique (11) configurées pour effectuer un traitement de séchage des produits avec des paramètres différents, les première et seconde lignes de source de chaleur (60, 70) étant des lignes d'extraction d'air vicié à partir des première et seconde zones climatiques (11).

3. Unité de séchage (1) selon la revendication 2, dans laquelle la première ligne de source de chaleur (60) est configurée pour transporter de l'air vicié ayant un point de rosée inférieur par rapport à l'air vicié transporté sur la seconde ligne de source de chaleur (70), la première unité de récupération de chaleur (52) étant agencée en série et en amont de la seconde unité de récupération de chaleur (53), la première unité de récupération de chaleur (52) étant associée à la première ligne de source de chaleur (60, 70) de sorte que la récupération de chaleur est effectuée dans l'ordre croissant du point de rosée de l'air vicié.

4. Unité de séchage (1) selon la revendication 2, dans laquelle le second circuit (51) comprend une bifurcation définissant ainsi au moins une première branche (511) et une seconde branche (512) en parallèle, la première unité de récupération de chaleur (52) étant agencée sur la première branche (511) et la seconde unité de récupération de chaleur (53) étant agencée sur la seconde branche (512), la première branche (511) étant formée de manière à refluer dans la seconde branche (512) en aval de la seconde unité de récupération de chaleur (53) et en amont de la pompe à chaleur (30).

5. Unité de séchage (1) selon la revendication 4, dans laquelle la première unité de récupération de chaleur (52) comprend :
- une pompe à chaleur supplémentaire (521) associée à la première branche (511) pour transférer la chaleur au second milieu de transfert de chaleur ;
- un troisième circuit (522) d'un troisième milieu de transfert de chaleur associé à la pompe à chaleur (30) comme source de chaleur ;
- un échangeur de chaleur (523) agencé sur le troisième circuit (522) en amont de la pompe à chaleur (30), l'échangeur de chaleur (523) étant associé à l'une des lignes de source de chaleur (60, 70) de manière à transférer de la chaleur au troisième milieu de transfert de chaleur.

6. Unité de séchage (1) selon la revendication 1, dans laquelle la première ligne de source de chaleur (60) est une ligne d'extraction d'eau d'évacuation à partir d'une ligne de refroidissement des utilités de l'unité de séchage (1), tandis que la seconde ligne de source de chaleur (70) est une ligne d'extraction d'air vicié à partir du séchoir (10).

7. Unité de séchage (1) selon l'une quelconque des revendications précédentes, dans laquelle la ligne de source de chaleur (60, 70) sous la forme d'une ligne d'extraction d'air vicié comprend une voie d'évacuation (62, 72) pour évacuer l'air vicié dans l'environnement.

8. Unité de séchage (1) selon la revendication 7, dans laquelle le séchoir (10) comprend au moins une zone climatique (11) où les produits sont séchés et un système (81, 82) pour régler une valeur d'humidité relative dans ladite au moins une zone climatique (11), le système comprenant au moins un capteur d'humidité relative (81) pour surveiller l'humidité relative de l'air dans la zone climatique (11) et une unité de commande (82) configurée au moins pour :
- recevoir les données d'humidité relative du capteur d'humidité relative (81) ;
- comparer ces données avec une plage prédéfinie ;
- régler le débit d'air vers l'unité de récupération de chaleur (52, 53) et le débit d'air évacué dans l'environnement pour maintenir le niveau d'humidité relative à l'intérieur de la zone climatique (11) dans la plage prédéfinie.

9. Procédé de séchage pour sécher des pâtes ou des snacks, comprenant les étapes de :
sécher les produits au moyen d'un flux d'air circulant, l'étape de sécher amenant l'air à collecter l'humidité des produits, devenant ainsi de l'air vicié ;
chauffer le flux d'air circulant avant l'étape de sécher, l'étape de chauffer ayant lieu dans un échangeur de chaleur (20) ;
faire circuler un premier milieu de transfert de chaleur dans un premier circuit (40), l'étape de chauffer le flux d'air circulant se produit par transfert de chaleur du premier milieu de transfert de chaleur au flux d'air circulant, ledit premier circuit (40) se développant entre une pompe à chaleur (30) et l'échangeur de chaleur (20) de sorte que le premier milieu de transfert de chaleur reçoit de la chaleur de la pompe à chaleur et la transfère au flux d'air dans l'échangeur de chaleur (20) ;
**caractérisé en ce que** le procédé de séchage comprend les étapes de :
faire circuler un second milieu de transfert de chaleur dans un second circuit (51), ledit second circuit (51) étant associé à la pompe à chaleur (30) de sorte que le second milieu de transfert de chaleur transfère de la chaleur au premier milieu de transfert de chaleur via la pompe à chaleur (30) ;
chauffer le second milieu de transfert de chaleur circulant dans le second circuit (51), avant le transfert de chaleur du second milieu de transfert de chaleur vers la pompe à chaleur (30) ;
l'étape de chauffer le second milieu de transfert de chaleur comprenant au moins une première étape de chauffer et une seconde étape de chauffer, les première et seconde étapes de chauffer comprenant toutes deux une étape de récupérer de la chaleur à partir des fluides d'échappement utilisés dans les procédés internes au procédé de séchage, au moins l'une des première et seconde étapes de chauffer le second milieu de transfert de chaleur ayant lieu par récupération de chaleur à partir de l'air vicié de l'étape de sécher.

10. Procédé de séchage selon la revendication 9, dans lequel l'étape de sécher comprend deux étapes de sécher différentes ayant lieu dans une première et une seconde zone climatique, la première étape de chauffer ayant lieu par récupération de chaleur à partir de l'air vicié extrait de la première zone climatique (11) et la seconde étape de chauffer ayant lieu par récupération de chaleur à partir de l'air vicié extrait de la seconde zone climatique (11).

11. Procédé de séchage selon la revendication 10, dans lequel les première et seconde étapes de chauffer se produisent en série, la première étape de chauffer se produisant par récupération de chaleur à partir de l'air vicié ayant un point de rosée inférieur tandis que la seconde étape de chauffer se produit par récupération de chaleur à partir de l'air vicié ayant un point de rosée supérieur.

12. Procédé de séchage selon la revendication 10, dans lequel le second circuit (51) comprend une bifurcation définissant ainsi au moins une première branche (511) et une seconde branche (512) en parallèle ; la première étape de chauffer et la seconde étape de chauffer ayant lieu en parallèle au moyen respectivement d'une première unité de récupération de chaleur (52) agencée sur la première branche (511) et d'une seconde unité de récupération de chaleur (53) agencée sur la seconde branche (512), la première branche (511) étant formée de manière à refluer dans la seconde branche (512) en aval de la seconde unité de récupération de chaleur (53) et en amont de la pompe à chaleur (30).

13. Procédé de séchage selon la revendication 9, dans lequel la première étape de chauffer se produit par récupération de chaleur à partir de l'eau d'évacuation extraite d'une ligne de refroidissement des utilités associées au procédé de séchage.

14. Procédé de séchage selon l'une quelconque des revendications 9 à 13, dans lequel l'étape de sécher a lieu dans une zone climatique correspondante (11), le procédé de séchage comprenant une étape de régler une valeur d'humidité relative dans la zone climatique (11) ; l'étape de régler comprend l'étape de :
- surveiller l'humidité relative de l'air dans la zone climatique (11) ;
- comparer les données acquises avec une plage prédéfinie d'humidité relative de l'air ;
- régler le débit d'air destiné à la récupération de chaleur et le débit d'air évacué dans l'environnement pour maintenir le niveau d'humidité relative à l'intérieur de la zone climatique (11) dans une plage prédéfinie.
